# EUROPEAN PATENT APPLICATION

(11) **EP 2 407 345 A1**
(43) Date of publication of application: **18.01.2012**
(21) Application number: 10169877.7
(22) Date of filing: 16.07.2010
(51) Int. Cl.: B60Q 1/12

(54) **Adjustable headlight assembly**

(71) Applicant: Long Jing International Technology Enterprise Co., Ltd., Yongkang City (TW)
(72) Inventor: Lai, Ching-Tsung, Yongkang City (TW)
(74) Representative: Viering, Jentschura & Partner

(57) **Abstract**

A headlight assembly includes a gyro detector (1), a control unit (2) and a curved frame (3) to which multiple Light Emitting Diodes installed. The gyro detector (1) detects the angles change of a vehicle and sends a signal to the control unit (2) which controls operation of the Light Emitting Diodes on the curved frame (3) to provide sufficient illumination to the driver while the headlight assembly does not turn along with the turn of the vehicle.

## Description

### FIELD OF THE INVENTION

The present invention relates to a head light assembly for vehicles, and more particularly, to a headlight assembly cooperated with a gyro detector to activate Light Emitting Diodes on a curved frame to provide sufficient light.

### BACKGROUND OF THE INVENTION

A conventional vehicle headlight does not change its angle along with the turn of the vehicle. When the vehicle turns, the driver cannot see the dead spot at the corner, which may cause an accident. The latest adjustable headlight assembly for vehicles can turn along with the turn of the vehicle and generally includes a light unit, an installation unit for installing the light unit, a driving unit and a connection unit. The light unit includes a main part and a shaft. The driving unit includes a power source and an output shaft which is driven by the power source. The connection unit includes a first frame which is connected to the shaft of the light unit, a second frame connected with the output shaft of the driving unit, and a connection frame which is connected to the first and second frames and adjusts the second frame without affecting the power output. The driving unit can be installed at a position away from the light unit so that the driving unit can be conveniently installed to the vehicle.

However, the conventional adjustable headlight assembly has to be cooperated with a power unit and a rotation mechanism which is rotated by the power unit. All of the components or parts make the conventional adjustable headlight assembly to be pricy and require intense maintenance.

The present invention intends to provide a headlight assembly which does not turn along with the turn of the vehicle and can provide sufficient illumination to the driver when turning the vehicle.

### SUMMARY OF THE INVENTION

The present invention relates to a headlight assembly and comprises a gyro detector for detecting angles change of a vehicle. A control unit is electrically connected to the gyro detector and receives signals from the gyro. A curved frame is electrically connected to the control unit and multiple Light Emitting Diodes are installed to the curved frame. The control unit controls operation of the Light Emitting Diodes on the curved frame.

When the vehicle turns, the gyro detects the angle change of the vehicle and a signal is sent to the control unit which controls the Light Emitting Diodes on different portions of the curved frame to activate so as to provide sufficient illumination toward the direction of turning.

In addition, the curved frame of the headlight assembly includes a day-time zone, a turning zone, a high-beam zone, a low-beam zone, a fog-light zone and an illumination member.

The primary object of the present invention is to provide a curved frame which has a curved surface so that the curved frame does not need to turn and the Light Emitting Diodes on the curved frame can be activated to provide illumination in the direction of turning.

The present invention will become more obvious from the following description when taken in connection with the accompanying drawings which show, for purposes of illustration only, a preferred embodiment in accordance with the present invention.

### BRIEF DESCRIPTION OF THE DRAWINGS

Fig. 1 shows the components of the headlight assembly of the present invention;
Fig. 2 is a perspective view to show that the headlight assembly of the present invention is installed to a vehicle;
Fig. 3 shows the first status of use of the headlight assembly of the present invention;
Fig. 4 shows the second status of use of the headlight assembly of the present invention, and
Fig. 5 shows that the headlight assembly of the present invention includes an illumination member.

### DETAILED DESCRIPTION OF THE PREFERRED EMBODIMENT

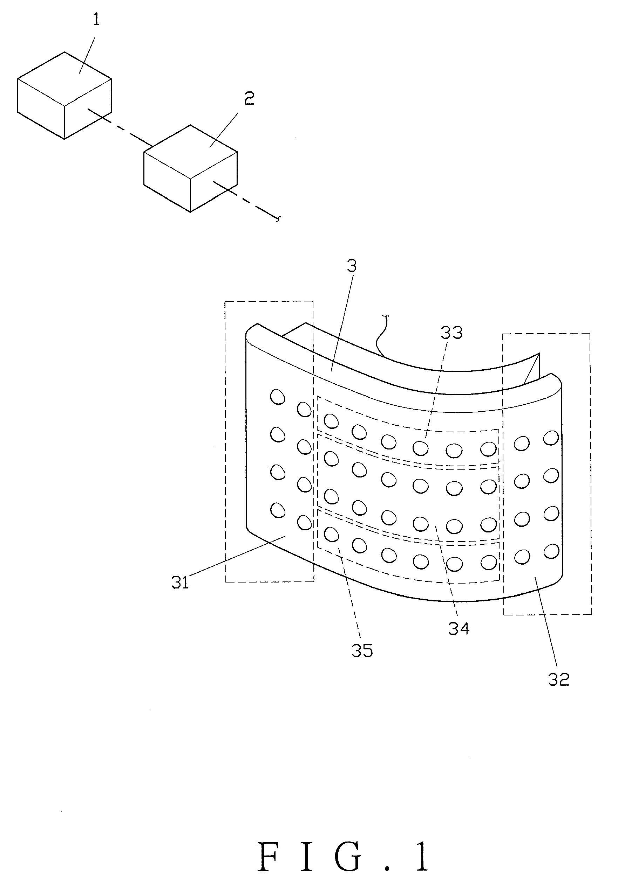

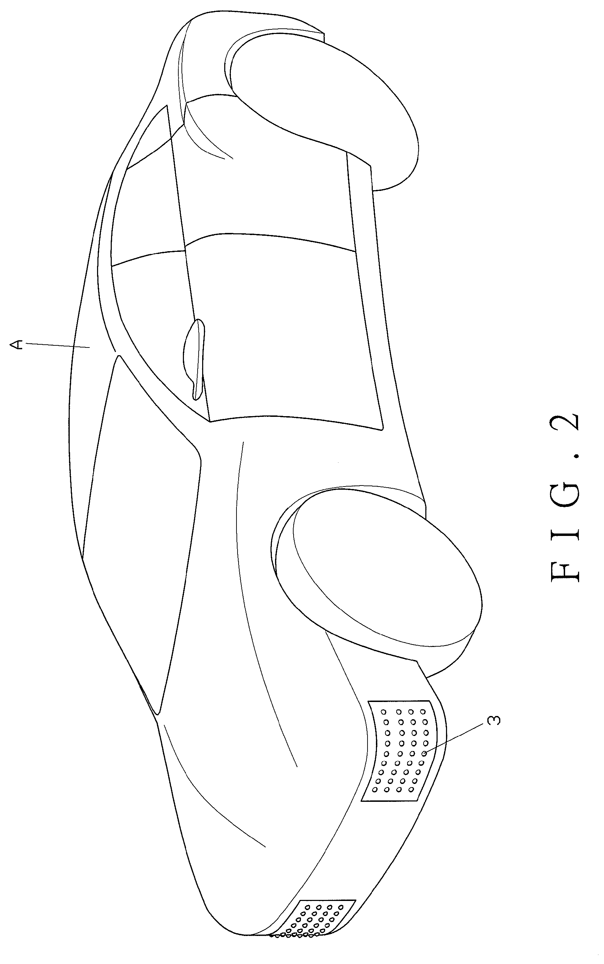

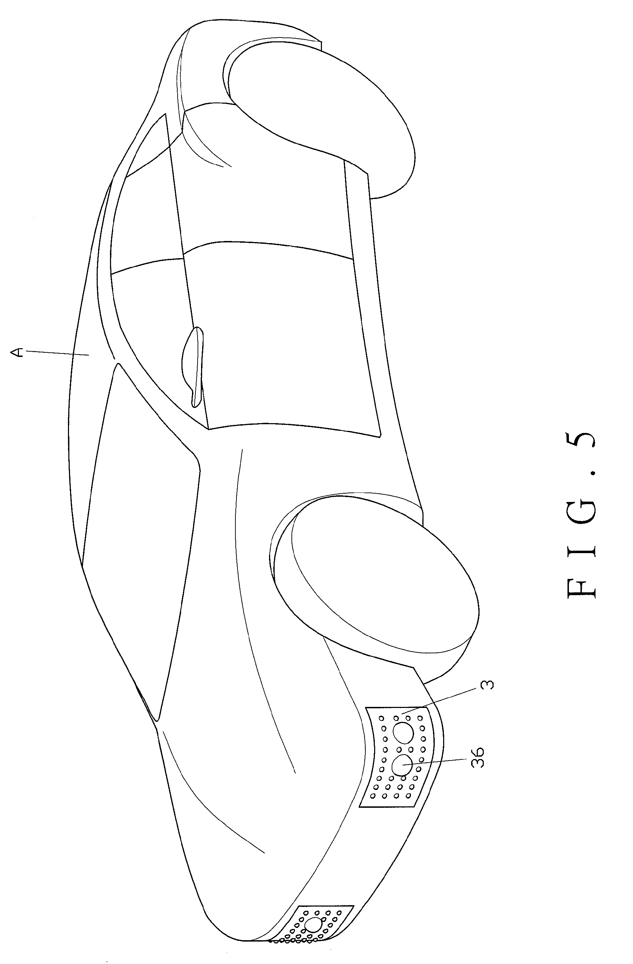

Referring to Figs. 1 and 2, the headlight assembly of the present invention comprises a gyro detector 1 for detecting the angles change of a vehicle "A" when the vehicle "A" turns, or the inclination change of the vehicle "A" when the vehicle "A" moves on an uphill road or a downhill road. The gyro detector 1 generates a signal according to the change of the angles or inclination genera. A control unit 2 is electrically connected to the gyro detector 1 and receives the signals from the gyro detector 1. A curved frame 3 is electrically connected to the control unit 2 and multiple Light Emitting Diodes are installed to the curved frame 3. The control unit 2 controls operation of the Light Emitting Diodes on the curved frame 3. In addition, the curved frame 3 includes a day-time zone 31, a turning zone 32, a high-beam zone 33, a low-beam zone 34, and a fog-light zone 35 to increase the function of the headlight assembly of the present invention. The combination reduces the cost when individually manufacturing each zone mentioned above. When needed, the curved frame 3 may have an illumination member 36 as shown in Fig. 5.

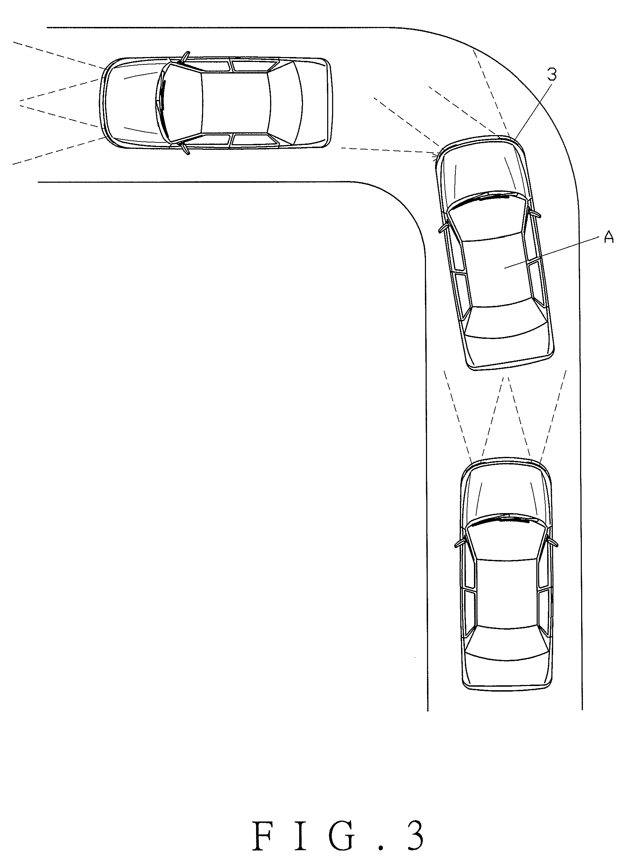

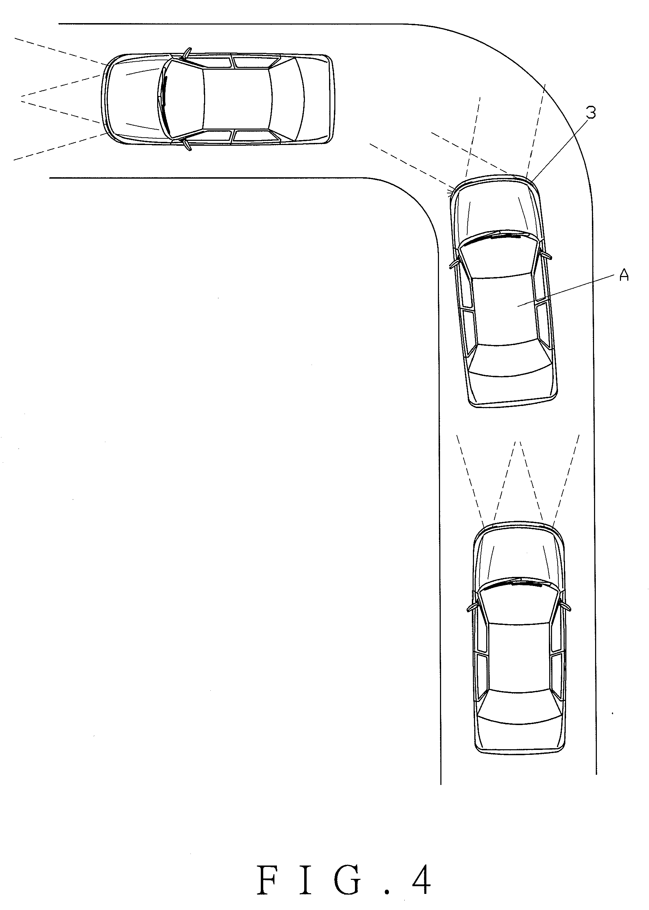

When in use, as shown in Fig. 3, when the vehicle "A" moves along a straight road, the Light Emitting Diodes on the curved frame 3 illuminate the front of the vehicle "A". When the vehicle "A" turns, the Light Emitting Diodes of the turning zone 32 flash to indicate the turn signal and the gyro detects the turning angle and generates a signal which is received by the control unit 2 so that the Light Emitting Diodes located toward the turning direction are activated. For example, the light beam changes its angle relative to the axis of the vehicle "A" about 15 degrees. Alternatively, the angle of the light beam provided by the Light Emitting Diodes is not changed, and the range of the light beam becomes wider as shown in Fig. 4 to include the area that is located 15 degrees from the axis of the vehicle "A". When the vehicle "A" returns to the straight movement status, the gyro detector 1 detects the change and the operation of the Light Emitting Diodes is properly amended and only the Light Emitting Diodes that provide the front portion of the vehicle "A" are activated. It is noted that when the vehicle "A" moves along an uphill road or a downhill rod, the inclination change can also be detected by the gyro detector 1 and the illumination angle is also adjusted.

The headlight assembly of the present invention provides a curved frame 3 with multiple Light Emitting Diodes connected thereto so that the headlight assembly does not need to turn along with the turning of the vehicle to provide sufficient illumination. The headlight assembly of the present invention reduces the cost of manufacture, maintenance and installation.

While we have shown and described the embodiment in accordance with the present invention, it should be clear to those skilled in the art that further embodiments may be made without departing from the scope of the present invention.

## Claims

1. A headlight assembly, **characterized by**:
a gyro detector (1) for detecting angles change of a vehicle;
a control unit (2) electrically connected to the gyro detector (1) and receiving signals from the gyro detector (1), and
a curved frame (3) electrically connected to the control unit (2) and multiple Light Emitting Diodes installed to the curved frame (3), the control unit (2) controlling operation of the Light Emitting Diodes on the curved frame (3).

2. The headlight assembly as claimed in claim 1, wherein the curved frame (3) includes a day-time zone (31).

3. The headlight assembly as claimed in claim 1, wherein the curved frame (3) includes a turning zone (32).

4. The headlight assembly as claimed in claim 1, wherein the curved frame (3) includes a high-beam zone (33).

5. The headlight assembly as claimed in claim 1, wherein the curved frame (3) includes a low-beam zone (34).

6. The headlight assembly as claimed in claim 1, wherein the curved frame (3) includes a fog-light zone (35).

7. The headlight assembly as claimed in claim 1, wherein the curved frame (3) includes an illumination member (36).
